# EUROPÄISCHE PATENTSCHRIFT

(11) **EP 3 838 730 B1**
(45) Veröffentlichungstag und Bekanntmachung des Hinweises auf die Patenterteilung: **31.01.2024**
(21) Anmeldenummer: 20215532.1
(22) Anmeldetag: 18.12.2020
(51) Int. Cl.: B62K 11/14, B62K 23/02, B62J 50/22, B62J 50/21

(54) **MOTORRAD MIT BEDIENBAREM MULTIFUNKTIONSGERÄT**
MOTORCYCLE WITH OPERABLE MULTIFUNCTION DEVICE
MOTOCYCLE POURVU D'UN APPAREIL MULTIFONCTIONNEL COMMANDABLE

(30) Priorität: 19.12.2019 AT 511312019
(43) Veröffentlichungstag der Anmeldung: 23.06.2021
(73) Patentinhaber: KTM AG, 5230 Mattighofen (AT)
(72) Erfinder: OTT, Andreas, 83135 Schechen (DE)
(74) Vertreter: Torggler & Hofmann Patentanwälte - Innsbruck

(56) Entgegenhaltungen:
- EP-A1- 3 373 624
- WO-A1-2018/041999
- DE-A1-102013 200 179
- DE-A1-102016 203 194
- DE-T2- 60 035 649
- TW-U- M 549 732

## Beschreibung

Die Erfindung betrifft ein Set umfassend ein Motorrad mit
- einer Displayeinheit zur Darstellung von Informationen zum Fahrzustand und zu Betriebsparametern des Motorrads,
- einer Bedieneinheit von der Steuerbefehle zur Steuerung der Displayeinheit generierbar sind,
- einem in einer Halterung lösbar befestigbares Multifunktionsgerät mit einem Bildschirm, wobei eine Applikation auf dem Multifunktionsgerät installierbar ist, mit der weitere, auf dem Multifunktionsgerät installierte Applikationen öffenbar sind, wobei die Auswahl an von der Applikation öffenbaren weiteren Applikationen in Form von Piktogrammen auf dem Bildschirm darstellbar ist,
- einer Steuereinheit mit der Steuerbefehle zur Steuerung der Applikation und den von der Applikation öffenbaren weiteren Applikationen an das Multifunktionsgerät übermittelbar sind.

Die DE 10 2016 203 194 zeigt ein Motorrad mit einer Bedieneinheit zur Beeinflussung von Motorradfunktionen, insbesondere einer Anzeigefunktion. Dabei ist eine Zusatzbedieneinheit vorgesehen, die zur Ausgabe von Funkgerätesteuerbefehlen eingerichtet ist, insbesondere um Funkgerätefunktionen zu beeinflussen. Eine Steuereinrichtung ist mit der Bedieneinheit und der Zusatzbedieneinheit datentechnisch gekoppelt, wobei die Steuereinrichtung zur Steuerung von Motorradfunktionen und zum Empfang von durch die Zusatzbedieneinheit ausgegebenen Funkgerätesteuerbefehlen eingerichtet, auf deren Basis über eine in der Steuereinrichtung vorgesehene Sendeeinrichtung ein Funkgerät, wie zum Beispiel ein Mobiltelefon gesteuert werden kann. Diese Bedieneinheit hat den Nachteil, dass durch die Zusatzbedieneinheit am Lenker angeordnet ist, wodurch von der Bedienung des Motorrads abgelenkt wird. Dies stellt ein erhebliches Sicherheitsrisiko dar.

Die DE 10 2016 202 729 zeigt eine Griffschalter für ein Motorrad, der einen zusammengesetzten Schalter umfasst, welcher ausschließlich zum Bedienen etwa einer im Cockpit des Motorrads integrierten Navigationsvorrichtung geeignet ist, während er mit anderen Schaltern in Einklang gebracht wird. Dadurch kann die Navigationsvorrichtung vom Fahrer über den zusammengesetzten Schalter bedient werden, während der Fahrer in der Fahrhaltung ist und andere Funktionen des Motorrads über die vorhandenen Schalter steuern kann. Im Gehäuse des Griffschalters sind sowohl der zusammengesetzte Schalter als auch die anderen Schalter angeordnet. Die Navigationsvorrichtung kann durch ein Smartphone oder ein ähnliches tragbares elektronisches Gerät ersetzt werden. Auch mit diesem Griffschalter ist der Nachteil verbunden, dass der zusammengesetzte Schalter eine zusätzliche Bedieneinheit am Lenker darstellt, deren Bedienung ablenkt, was insbesondere bei Motorrädern ein erhebliches Sicherheitsrisiko darstellt.

Das Dokument EP 3 373 624 A1 offenbart die Merkmale der Präambel von Anspruch 1.

Bei immer mehr Motorrädern ist eine Halterung für ein Smartphone verbaut, welches für unterschiedliche Funktionen während Motorradtouren verwendet wird. Meistens handelt es sich dabei um ältere Motorräder bzw. Motorräder, deren Display noch keine Connectivity-Features, wie z. B. Navigationsfunktionen oder Musikfunktionen, durch eine Anbindung an eine Navigationsvorrichtung oder ein Smartphone anbieten. Häufig werden dabei Halterungen nachträglich am Motorrad befestigt. Besonders geschätzt ist dabei der Vorteil einer Navigation über ein Smartphone, das sowieso bei jeder Motorradtour mitgeführt wird. Die Bedienung eines derart befestigten Smartphones ist aber äußerst mühsam und während der Fahrt praktisch gar nicht möglich, zumal mit Motorradhandschuhen weder die Tasten noch der Touchscreen des Smartphones benutzbar sind.

Im Stand der Technik ist es auch bekannt, bei Motorräder im Cockpit neben einer Displayeinheit, auf der die wesentlichen Informationen über den Motorradzustand wie zum Beispiel Drehzahl oder Geschwindigkeit dargestellt werden, zusätzlich eine Navigationsvorrichtung anzuordnen, wobei die Navigationsvorrichtung mit der Displayeinheit über eine Datenleitung verbunden ist. Dabei kann eine Bedieneinheit vorgesehen sein, mit der sowohl die Displayeinheit als auch die Navigationsvorrichtung gesteuert werden kann, wobei über eine Umschaltvorrichtung ausgewählt wird, ob die Displayeinheit oder die Navigationsvorrichtung gesteuert wird. Da es sich hierbei um ein proprietäres System handelt, liegt kein Gestaltungsraum für den Benutzer vor. Zudem haben derartige Systeme den Nachteil, dass die notwendigen Datenleitungen zusätzlichen Aufwand bedeuten und bereits beim Zusammenbau des Motorrads konfektioniert sein müssen. Es handelt sich somit insgesamt um eine unflexible Lösung, wobei zudem ein nachträglicher Einbau in der Regel nicht möglich ist.

Die vorliegende Erfindung stellt sich daher die Aufgabe, die obigen Nachteile zu vermeiden und ein Set mit einem Motorrad und einem Multifunktionsgerät zur Verfügung zu stellen, bei dem einerseits die Möglichkeit geschaffen wird, das Multifunktionsgerät zu steuern, ohne dass der Fahrer von der Bedienung des Motorrads abgelenkt wird. Weiters soll in Bezug auf die auszuwählenden Funktionen des Multifunktionsgeräts hohe Flexibilität gegeben sein.

Diese Aufgabe wird durch ein Motorrad mit den Merkmalen des Anspruchs 1 gelöst.

Das erfindungsgemäße Motorrad umfasst eine Displayeinheit mit der Informationen zum Fahrzustand und zu Betriebsparametern des Motorrads dargestellt werden. Üblicherweise handelt es sich hierbei um eine an sich im Stand der Technik bekannte Displayeinheit mit einem LCD- oder OLED-Display, beispielweise ein sogenanntes TFT-Display (Thin-Film-Transistor Display). Denkbar sind aber auch andere Arten von Displayeinheiten, etwa mit einem zumindest teilweise analogen Display. Dargestellt werden auf der Displayeinheit Informationen wie etwa die derzeitige Fahrgeschwindigkeit, die Drehzahl des Motors, der km-Stand des Motorrads, die Lufttemperatur aber auch sicherheitsrelevante Informationen beispielsweise in Bezug auf kritische Systemzustände des Motorrads (meist in Form von Warn- oder Kontrollleuchten).

Mit einer Bedieneinheit wird die Displayeinheit gesteuert, indem Steuerbefehle zur Steuerung der Displayeinheit generierbar sind. Dadurch kann zum Beispiel mit Schaltern, welche die Bedieneinheit umfasst, ausgewählt werden, welche Informationen dargestellt werden. Es ist auch möglich, dass der Bediener am Motorrad verschiedene Einstellungen, beispielsweise betreffend das Set-Up des Motorrads, vornimmt, wobei die verschiedenen möglichen Einstellungen von der Displayeinheit dargestellt und über die Bedieneinheit ausgewählt werden. In jedem Fall werden etwa bei der Betätigung eines Schalters der Bedieneinheit Steuerbefehle zur Steuerung der Displayeinheit generiert.

Das erfindungsgemäße Set weist weiters ein in einer Halterung lösbar befestigbares Multifunktionsgerät mit einem Bildschirm auf. Die Halterung ist dabei im Bereich des Cockpits und bevorzugt in der Nähe der Displayeinheit angeordnet, sodass der Fahrer sowohl die Displayeinheit als auch den Bildschirm des Multifunktionsgeräts im Auge haben kann. Auf dem Multifunktionsgerät ist eine Applikation installierbar, mit der weitere, auf dem Multifunktionsgerät installierte Applikationen öffenbar sind. Diese weiteren Applikationen sind in Form von Piktogrammen auf dem Bildschirm darstellbar.

Mit einer Steuereinheit können Steuerbefehle zur Steuerung der Applikation an das Multifunktionsgerät übermittelt werden. Insbesondere können diese Steuerbefehle zur Auswahl der Öffnung der vom Fahrer ausgewählten Applikation und in weiterer Folge zur Steuerung dieser Applikation dienen.

In einer bevorzugten Ausführungsform der Erfindung ist das Multifunktionsgerät als Smartphone ausgebildet. Die üblicherweise auf einem Smartphone installierten Applikationen sind viel zu zahlreich, um während der Fahrt eines Motorrads bedient zu werden. Zudem haben die allermeisten Applikationen keine Relevanz für eine Fahrt mit einem Motorrad. Die erfindungsgemäß vorgesehene Applikation kann daher zunächst dazu dienen, eine auf die für eine Motorradfahrt relevanten Applikation Auswahl am Bildschirm des Smartphones anzuzeigen. In weiterer Folge wird mit der erfindungsgemäßen Applikation eine der weiteren Applikationen ausgewählt und über Steuerbefehle der Steuereinheit gesteuert.

Generell kann es sich bei den mit der erfindungsgemäßen Applikation öffenbaren weiteren Applikation beispielsweise um eine Applikation mit einer Musikfunktion, eine Applikation mit einer Navigationsfunktion, eine Applikation mit einer Telefonfunktion, eine Applikation mit Messaging-Funktion, eine Applikation zur Bedienung einer Kamera, eine Applikation zur Anzeige oder zur sprachlichen Wiedergabe von Wetterinformationen, eine Applikation zur Anzeige oder sprachlichen Wiedergabe von Nachrichten und dergleichen mehr handeln.

Erfindungsgemäß ist vorgesehen, dass die Steuerbefehle zur Steuerung der Applikation und den von der Applikation öffenbaren weiteren Applikationen von der Bedieneinheit generierbar sind, das heißt, dass die Bedieneinheit, mit der die Displayeinheit gesteuert wird auch für die Steuerung des Multifunktionsgeräts über die darauf installierte Applikation herangezogen wird. Um auszuwählen, ob die Displayeinheit oder das Multifunktionsgerät gesteuert wird, ist eine Umschaltvorrichtung zum Wechsel zwischen der Steuerung der Displayeinheit und der Steuerung des Multifunktionsgeräts vorgesehen.

Dazu ist ein Computerprogramm vorgesehen, welches die Umschaltvorrichtung überwacht und bei Betätigung der Umschaltvorrichtung von jenem Betriebsmodus, in dem durch eine Betätigung der Bedieneinheit Steuerbefehle für die Displayeinheit generiert werden, in jenen Betriebsmodus zu wechseln, in dem durch eine Betätigung der Bedieneinheit Steuerbefehle für das Multifunktionsgerät generiert werden, und umgekehrt.

Die Bedieneinheit weist Betätigungselemente, vorzugsweise in Form von Dreh-, Drück-, oder Kippschaltern auf. Mit diesen Betätigungselementen wird die Bedieneinheit gesteuert, beispielsweise die darzustellende Information oder die konkrete Darstellungsart der Displayeinheit ausgewählt oder Einstellungen am Motorrad anhand einer von der Displayeinheit dargestellten Auswahl vorgenommen. Die Betätigungselemente können auch zur Steuerung des Multifunktionsgeräts herangezogen werden, nachdem die Umschaltvorrichtung betätigt wird. Dadurch ist es möglich, das Multifunktionsgerät zu steuern, ohne den Fahrer übermäßig abzulenken. Durch die installierbare Applikation und die weiteren Applikationen ist eine hohe Flexibilität gegeben. Insbesondere können nachträglich weitere öffenbare Applikation ergänzt oder die vorhandenen Applikationen erweitert werden.

Während die Display-Einheit meist über die gesamte Lebensdauer des Motorrads kein Update ihrer Betriebssoftware erhält, können bei einem Multifunktionsgerät, insbesondere in Form eines Smartphones, regelmäßig Updates der Betriebssoftware und der installierten Applikationen installiert werden. Zudem können lösbar befestigbare Multifunktionsgeräte selbst nach kürzerer Zeit erneuert werden, wodurch auch die Hardware des Multifunktionsgeräts am neuesten Stand bleibt.

Es kann vorgesehen sein, dass von der Display-Einheit und/oder am Bildschirm des Multifunktionsgeräts angezeigt wird, welcher Bedienmodus gerade aktiv ist, das heißt ob die Bedieneinheit momentan zur Steuerung der Display-Einheit oder zur Steuerung des Multifunktionsgeräts eingestellt ist. Es kann aber auch vorgesehen sein, für diesen Zweck eine gesonderte Warnleuchte an der Bedieneinheit vorzusehen.

Über die gewöhnliche Bedieneinheit, die beispielsweise handelsübliche Schalter für die Steuerung der Displayeinheit umfasst, können somit Steuerbefehle sowohl an die Displayeinheit als auch an das Multifunktionsgerät gesendet werden. Es sind keine zusätzlichen Bedieneinheiten am Lenker notwendig. Die Bedieneinheit selbst kann neben Betätigungselementen für die Steuerung der Displayeinheit und die Steuerung des Multifunktionsgeräts weitere Betätigungselemente aufweisen, beispielsweise um die Fahrtrichtungsanzeiger oder eine Hupe zu betätigen.

Die erfindungsgemäße Applikation auf dem Multifunktionsgerät ist die Schnittstelle zwischen dem Motorrad, dessen Fahrer und dem Multifunktionsgerät. Mit dieser Applikation sind die Funktionen des Multifunktionsgeräts bedienbar. Die Applikation, mit der die weiteren installierten Applikationen öffenbar sind, dient somit als Schnittstellen-Applikation.

Weitere vorteilhafte Ausführungen der Erfindung sind in den abhängigen Ansprüchen definiert.

In einer bevorzugten Ausführungsform der Erfindung ist die Bedieneinheit als Griffschalter am Lenker des Motorrads ausgebildet. Bei einem Griffschalter können die Betätigungselemente mit dem Daumen oder anderen Fingern betätigt werden, ohne dass die Hand vom Lenker genommen werden muss. Dadurch können über die öffenbaren Applikationen jene Funktionen während der Fahrt gefahrlos bedienbar sein, die besonders häufig verwendet werden.

Unabhängig von der Bedienung des Multifunktionsgeräts über die erfindungsgemäße Applikation kann es vorgesehen sein, den Bildschirm des Multifunktionsgeräts als Touch-Screen und so kompliziertere Bedienschritte im Stand über den Touch-Screen durchzuführen. Beispielsweise kann es sich dabei um allgemeine Einstellungen der Applikationen, wie z. B. Ansichtseinstellungen oder Einstellungen in Bezug auf die Sprachausgabe handeln. Zudem kann es vorgesehen sein, bei einer Applikation mit Navigationsfunktion Navigationsziele über den Touch-Screen des Multifunktionsgeräts vorzudefinieren, beispielsweise für eine längere Motorradtour. Bei einer Applikation mit Telefonfunktion können über den Touch-Screen Kontakte vordefiniert werden. Bei einer Applikation mit einer Massaging-Funktion können Nachrichten oder Textbausteine vordefiniert werden. Bei einer Applikation mit Musikfunktion (Music-Player) können Playlists eingerichtet werden.

Die Bedieneinheit kann Betätigungselemente in Form von Pfeiltasten und/oder in Form eines Mehrwegschalters, vorzugsweise eines Vier-, Fünf-, oder Sechswegeschalters, umfassen.

Bei der Umschaltvorrichtung kann es sich um ein gesondertes Betätigungselement, vorzugsweise in Form eines Schalters, auf der Bedieneinheit handeln. Es ist aber auch möglich, dass eine spezielle Betätigung eines Betätigungselements mit weiteren Funktionen die Umschaltvorrichtung betätigt. Dabei kann es sich etwa um ein langes Drücken des Betätigungselements handeln.

In einer bevorzugten Ausführungsform weist das Motorrad eine Sendeeinheit auf, mit der die Steuerbefehle zur Steuerung der Applikation sowie die Steuerbefehle zur Steuerung der von der Applikation öffenbaren weiteren Applikationen drahtlos an das Multifunktionsgerät übermittelbar sind. Dabei kann die Sendeeinheit zum Senden von Funkbefehlen, insbesondere gemäß dem Bluetooth^{®}-Standard, ausgebildet sein. Beispielsweise wird für die Übertragung das Bluetooth^{®}-Classic-Standard HID-Profil. herangezogen.

Durch eine drahtlose Übermittlung ist eine besonders hohe Flexibilität gegeben, zumal keine fest vorgegebenen Drahtleitungen im oder am Motorrad notwendig sind. Bei Verwendung standardisierter Funkbefehle, beispielsweise gemäß dem sehr verbreiteten Bluetooth^{®}-Standard, können unterschiedlichste Multifunktionsgeräte an das Motorrad gekoppelt werden, unabhängig davon, welche Art von Stecker das Multifunktionsgerät zur Verbindung mit einer Drahtleitung aufweist. Die Sendeeinheit selbst kann direkt in der Bedieneinheit integriert sein. Es kann aber auch möglich sein, die Sendeeinheit in der Displayeinheit anzuordnen. In diesem Fall werden die von der Bedieneinheit generierten Steuerbefehle für das Multifunktionsgerät über eine Drahtleitung an die Sendeeinheit übermittelt.

Alternativ ist es auch möglich, eine spezielle Kommunikationseinheit vorzusehen, die mit der Bedieneinheit und/oder mit der Displayeinheit über eine elektrische Leitung, insbesondere über eine Bus-Leitung, verbunden ist. Die Sendeeinheit zur Übermittlung der Steuerbefehle kann dabei in dieser Kommunikationseinheit angeordnet sein.

Die Sendeeinheit kann auch zwischen der Bedieneinheit und der Displayeinheit angeordnet sein. Die Sendeeinheit fängt in diesem Fall Steuerbefehle der Bedieneinheit ab und leitet diese je nach Betriebsmodus entweder an die Displayeinheit oder an das Multifunktionsgerät weiter. Die Sendeeinheit fungiert als Schnittstelle, die eine drahtlose Kommunikation zum Multifunktionsgerät ermöglicht. Die Sendeeinheit kann beispielsweise einen Mikrocontroller mit einem Bluetooth^{®}-Modul aufweisen, welche auf einer Leiterplatte in Form eines sogenannten Embedded-System eingebettet sind. Bei dieser Anordnung ist die Sendeeinheit mit der Bedieneinheit und der Displayeinheit verdrahtet.

In einer weiteren Ausführungsform der Erfindung sind von der Steuereinheit und/oder der Sendeeinheit Informationen zum Fahrzustand und/oder zu Betriebsparameters des Motorrads an das Multifunktionsgerät, vorzugsweise drahtlos, übermittelbar. In diesem Fall ist die erfindungsgemäße Applikation oder eine der weiteren von der erfindungsgemäßen Applikation öffenbaren Applikationen dazu ausgebildet, diese Informationen zum Fahrzustand und/oder zu den Betriebsparametern grafisch darzustellen. Dabei kann vorgesehen sein, dass mit der Bedieneinheit auswählbar ist, welche Informationen am Bildschirm des Multifunktionsgeräts dargestellt werden. Der Bildschirm des Multifunktionsgeräts fungiert als Zusatzbildschirm zur Displayeinheit. Dies hat den Vorteil, dass ein Mehr an Information für den Fahrer des Motorrads anzeigbar ist.

Bevorzugt ist vorgesehen, dass wenigstens eine der weiteren von der Applikation öffenbaren Applikationen eine Navigationsfunktion aufweist. Während die Displayeinheit Informationen zum Betriebszustand des Motorrads anzeigt, wird in diesem Fall vom Bildschirm des Multifunktionsgeräts eine vom momentanen Standort abhängige Information zum Fahrzustand dargestellt. Die Navigationsfunktion kann die übliche Funktionalität von im Stand der Technik an sich bekannten Navigationsgeräten aufweisen, insbesondere eine Turn-by-Turn-Navigation. Bei Steuerung mit der Bedieneinheit kann es aber vorgesehen sein, nur eine reduzierte Funktionalität anzubieten, beispielsweise indem nur vordefinierte Navigationsziele auswählbar sind.

Bei drahtlos übermittelbaren Steuerbefehlen weist das Multifunktionsgerät eine Empfangseinheit auf, mit der diese Steuerbefehle empfangbar sind. Dabei kann es sich beispielsweise um sogenannte Bluetooth^{®}-Listener handeln. Die empfangenen Steuerbefehle werden dann an die erfindungsgemäße Applikation und/oder die von der erfindungsgemäßen Applikation öffenbaren weiteren Applikationen übermittelt oder von diesen ausgelesen.

Zusätzlich oder alternativ kann vorgesehen sein, dass das Multifunktionsgerät eine Empfangsvorrichtung aufweist, die zum Empfang von Steuerbefehlen ausgebildet ist, die von einem externen Gerät generiert und übermittelt werden. Bei der Empfangsvorrichtung kann es sich um die Empfangseinheit handeln, welche die von der Sendeeinheit übermittelten Steuerbefehle empfängt. Es kann sich aber auch um eine gesonderte Vorrichtung handeln. Durch die Empfangsvorrichtung ist es möglich, das Multifunktionsgerät mit einem externen Gerät zu steuern. Beispielsweise kann es sich dabei um ein, vorzugsweise im Helm eingebautes Head-Set handeln. Dieses weist eine Vorrichtung auf, welche aus Sprachbefehlen Steuerbefehle für das Multifunktionsgerät generiert und an das Multifunktionsgerät sendet. Beispielsweise kann über die Spracheingabe beim Head-Set ein auf dem Multifunktionsgerät hinterlegter Kontakt gesucht und gegebenenfalls auch ein Anruf gestartet werden. Ein weiteres Beispiel ist die Auswahl eines Navigationszieles per Spracheingabe. Mögliche Beispiele von Sprachbefehlen sind etwa "Öffne Karte" oder "Navigiere zu ...". Es kann vorgesehen sein, auch die erfindungsgemäße Applikation mittels Spracheingabe zu steuern. Dabei kann vorgesehen sein, die Empfangsvorrichtung nur nach Betätigung eines Betätigungselements der Bedieneinheit oder nur während der Betätigung eines Betätigungselements der Bedieneinheit zu aktivieren.

In einer weiteren Ausführungsform der Erfindung weist das Multifunktionsgerät eine Sendevorrichtung auf, mit der Steuerbefehle an ein oder an mehrere externe Geräte drahtlos übermittelbar sind. Die Steuerbefehle werden dabei von der erfindungsgemäßen Applikation und den von der erfindungsgemäßen Applikation öffenbaren weiteren Applikationen generiert. Bei den drahtlos übermittelbaren Steuerbefehlen kann es sich um Funkbefehle, vorzugsweise gemäß dem Bluetooth^{®}-Standard handeln. Bei den externen Geräten kann es sich beispielsweise um eine Kamera, eine Smart-Watch und/oder ein Head-Set handeln. Dabei kann mit den Steuerbefehlen die Kamera, die Smart-Watch oder das Head-Set aktiviert werden. Die Generierung der Steuerbefehle kann durch eine Eingabe an der Bedieneinheit aktiviert werden, mit der die am Multifunktionsgerät installierten Applikationen gesteuert werden. Zur Steuerung des externen Geräts ist vorgesehen, dass wenigstens eine der weiteren, von der Applikation öffenbaren, Applikationen eine Steuerungsfunktion für das externe Gerät aufweist.

Die Sendevorrichtung kann aber auch dazu ausgebildet sein, Daten an ein externes Gerät zu übermitteln. So können beispielsweise auf dem Multifunktionsgerät hinterlegte oder vom Multifunktionsgerät empfangene Musikstücke an ein Head-Set übermittelt werden.

Die Sendevorrichtung kann auch dazu ausgebildet sein, Daten an das Motorrad, etwa an eine im Motorrad verbaute Kommunikationseinheit zurückzusenden. Diese Daten können dann beispielsweise auf der Displayeinheit angezeigt werden. Zusätzlich oder alternativ kann die Sendevorrichtung aber auch dazu ausgebildet sein, Steuerbefehle an das Motorrad zu übermitteln. Dabei können diese Steuerbefehlen durch eine der weiteren von der Applikation öffenbaren Applikationen generiert werden. So kann beispielsweise eine Applikation mit Wetterfunktion bei Vorhersage von Regen verschiedene Einstellungen des Motorrads abändern, wie etwa das ABS sensibler einzustellen oder den Motor bei Erreichen einer bestimmten Drehzahl abzuregeln. Die Sendevorrichtung kann auch dazu ausgebildet sein, von der Empfangsvorrichtung empfangene Steuerbefehle, die von einem externen Gerät generiert und übermittelt worden sind, an die Motorradsteuerung weiterzuleiten. Beispielsweise können über ein Head-Set Sprachbefehle "Blinker links" oder "Fernlicht an" eingegeben und über die Sendevorrichtung an die Motorradsteuerung weitergegeben werden. Diese führt diese Befehle dann aus, sodass etwa der Fahrtrichtungsanzeiger nach links aktiviert wird oder das Fernlicht eingeschaltet wird.

In einer weiteren Ausführungsform weist die Halterung eine Vorrichtung zum Laden des Multifunktionsgeräts auf. Dabei kann es sich um eine induktive oder eine kabelgebundene Ladevorrichtung handeln. Die Ladevorrichtung kann mit der Batterie des Motorrads verbunden sein. Dadurch ist es möglich, das Multifunktionsgerät während der Fahrt aufzuladen, damit es auch nach der Fahrt weiterhin benützbar ist.

Um die obige Funktionsweise zu ermöglichen betrifft die Erfindung darüber hinaus ein Computerprogrammprodukt für den Betrieb eines Motorrads. Das Computerprogrammprodukt umfasst Befehle, die bei der Ausführung des Programms durch einen Computer diesen veranlassen,
- die Bedieneinheit des Motorrads in zwei Betriebsmodi zu betreiben, wobei in einem Betriebsmodus bei Betätigung der Bedienungseinheit Steuerbefehle zur Steuerung einer Displayeinheit zur Darstellung von Informationen zum Fahrzustand und zu Betriebsparametern des Motorrads generiert werden, während im anderen Betriebsmodus bei Betätigung der Bedienungseinheit Steuerbefehle zur Steuerung einer auf einem Multifunktionsgerät installierten Applikation sowie von weiteren, von der Applikation öffenbaren, auf dem Multifunktionsgerät installierten Applikationen generiert und, vorzugsweise drahtlos, an das Multifunktionsgerät übermittelt werden, und
- eine Umschaltvorrichtung auf Betätigung zu überwachen und bei Betätigung der Umschaltvorrichtung den Betriebsmodus zu wechseln.

Die Erfindung betrifft weiters ein Datenträgersignal, das ein solches Computerprogrammprodukt überträgt, einen computerlesbaren Datenträger auf dem ein solches Computerprogrammprodukt gespeichert ist und ein Motorrad mit einem computerlesbaren Datenträger, auf dem ein solches Computerprogrammprodukt gespeichert ist. Mit einer Ladevorrichtung wird es vermieden, dass das Multifunktionsgerät während der Fahrt aufgrund des Batterieverbrauchs nicht mehr zur Verfügung steht.

Um die obige Funktionsweise zu ermöglichen betrifft die Erfindung darüber hinaus ein Computerprogrammprodukt für den Betrieb eines wie oben beschriebenen Multifunktionsgeräts. Das Computerprogrammprodukt umfasst Befehle, die bei der Ausführung des Programms durch ein Multifunktionsgerät dieses veranlasst, von der Bedieneinheit eines wie oben beschriebenen Motorrads generierte Steuerbefehle zu übernehmen und auf dem Multifunktionsgerät installierte Applikationen zu öffnen und zu steuern. Bei diesem Computerprogrammprodukt handelt es sich um die Applikation, mit der weitere, auf dem Multifunktionsgerät installierte Applikationen öffenbar und/oder steuerbar sind.

Die Erfindung betrifft weiters ein Datenträgersignal, das ein solches Computerprogrammprodukt überträgt, einen computerlesbaren Datenträger auf dem ein solches Computerprogrammprodukt gespeichert ist und ein Multifunktionsgerät mit einem computerlesbaren Datenträger, auf dem ein solches Computerprogrammprodukt gespeichert ist.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: eine Darstellung einer Bedieneinheit mit einer Zusatzbedieneinheit gemäß dem Stand der Technik,
- Fig. 2: eine erfindungsgemäße Bedieneinheit,
- Fig. 3: eine schematische Darstellung zu einer Ausführungsform der Erfindung,
- Fig. 4a, 4b: zwei schematische Darstellungen zu weiteren Ausführungsformen der Erfindung,
- Fig. 5: eine schematische Darstellung zu einer weiteren Ausführungsform der Erfindung,
- Fig. 6: eine schematische Darstellung einer Halterung, und
- Fig. 7: eine schematische Darstellung eines in der Halterung angeordneten Multifunktionsgeräts.

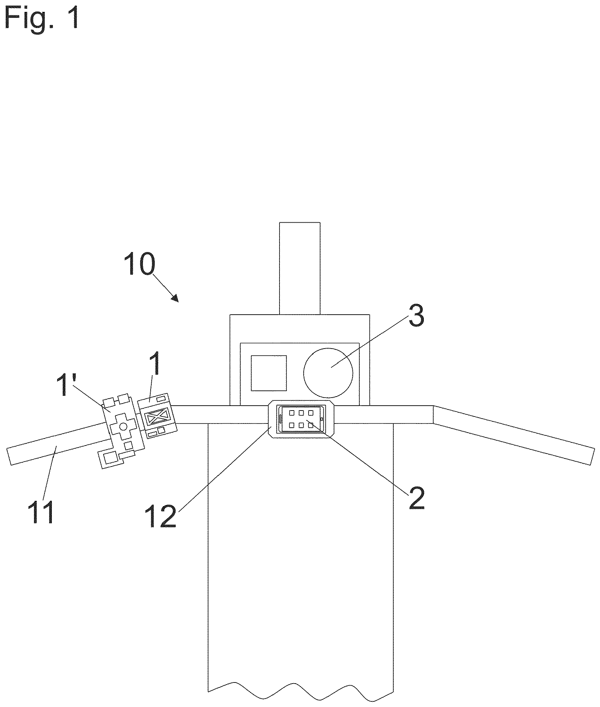

Fig. 1 zeigt in einer perspektivischen, schematischen Darstellung ein Motorrad 10 des Standes der Technik, bei dem zwei Bedieneinheiten 1, 1' am Lenker 11 befestigt sind. Die Displayeinheit 3 enthält die Instrumente, mit denen Informationen zum Fahrzustand, wie z. B. Geschwindigkeit, Drehzahl des Motors, Außentemperatur, Temperatur der Kühlflüssigkeit, Tageskilometer, etc. darstellbar sind. Die Displayeinheit 3 wird über die Bedieneinheit 1 gesteuert, die zu diesem Zweck Betätigungselemente in Form von Drückschaltern verfügt. Weitere, auf der Bedieneinheit 1 angeordnete Schalter, dienen z. B. zur Aktivierung und Beendigung der Fahrtrichtungsanzeiger oder zur Betätigung einer Hupe.

Eine zusätzliche Bedieneinheit 1' ist neben der Bedieneinheit 1 angeordnet und dient zur Steuerung eines in einer Halterung 12 befestigten Multifunktionsgeräts 2 in Form eines Smartphones. Dabei kann es sich um eine nachträglich angebrachte Halterung handeln. Durch die Bedienung sowohl der Bedieneinheit 1 als auch der zusätzlichen Bedieneinheit 1' wird der Fahrer des Motorrads 10 über die Maßen vom Verkehrsgeschehen abgelenkt, was ein großes Sicherheitsrisiko darstellt.

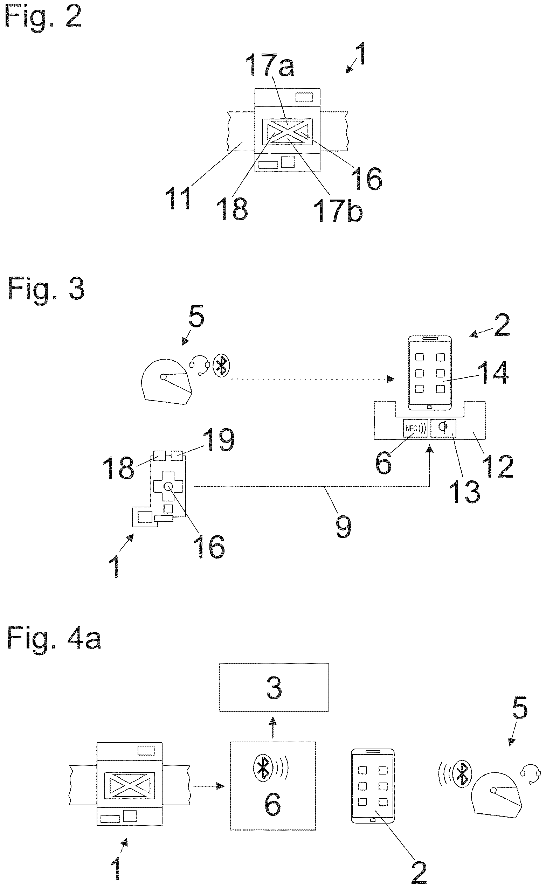

Die Fig. 2 zeigt eine Bedieneinheit 1 in Form eines am Lenker 11 montierten Griffschalters. Die Bedieneinheit 1 weist einen Vierwegeschalter auf, der zwei Pfeiltasten 17a, 17b aufweist. Auf der rechten Seite des Vierwegeschalters ist eine Auswahltaste angeordnet, die auch als Umschaltvorrichtung 16 fungiert. Auf der linken Seite ist eine Rücktaste 18 angeordnet. Unterhalb des Vierwegeschalters sind weitere Drück- bzw. Stellschalter, die im Gegensatz zum Vierwegeschalter nicht zur Steuerung der Displayeinheit 3 dienen, sondern beispielsweise zur Betätigung der Hupe oder zum Einschalten des Fernlichts.

Befindet sich die Bedieneinheit 1 in jenem Betriebsmodus, in dem die Displayeinheit 3 durch Betätigen der Betätigungselemente gesteuert wird, wird durch eine Betätigung der Pfeiltaste 17a ein Steuerbefehl generiert, der zur vorhergehenden Menüposition auf der Displayeinheit 3 führt. Eine Betätigung der Pfeiltaste 17b bewirkt einen Aufruf der nächstfolgenden Menüposition der Bedieneinheit 1. Die Taste 16a bewirkt eine Auswahl einer entsprechenden Menüposition. Eine Betätigung der Rücktaste 18 bewirkt die Auswahl der nächsthöheren Menüebene. Ein Wechsel in jenen Modus, in dem eine Betätigung der Bedieneinheit 1 Steuerbefehle für das Multifunktionsgerät 2 generiert, folgt, indem die als Umschaltvorrichtung 16 fungierende Auswahltaste länger als 500 ms gedrückt wird.

Nach Betätigung der Umschaltvorrichtung 16 werden Steuerbefehle für die Applikation generiert, mit der die auf dem Multifunktionsgerät 2 installierten Applikationen 7 öffenbar sind. Die Applikation dient zum einen dazu, eine reduzierte Auswahl an Applikationen 7 mittels Piktogrammen auf dem Bildschirm 14 des Multifunktionsgeräts 2 darzustellen und zur Auswahl bereitzuhalten. Mit den Pfeiltasten 17a, 17b wechselt die Applikation zwischen den verschiedenen öffenbaren Applikationen 7. Eine Betätigung der Auswahltaste, die bei langem Drücken als Umschaltvorrichtung 16 fungiert, öffnet eine konkret ausgewählte Applikation 7. Eine Betätigung der Rücktaste 18 führt in die nächsthöhere Menüebene zurück. Mit einem erneuten langen Drücken der Umschaltvorrichtung 16 wird der Betriebsmodus der Bedieneinheit 1 wiederum gewechselt und es werden Steuerbefehle für die Steuerung der Displayeinheit 3 generiert.

Die Tasten des Vierwegeschalters können mit einer zweiten Funktion belegt sein. So kann beispielsweise vorgesehen sein, dass ein langes, das heißt mehr als 500 ms andauerndes Drücken der Taste 17a die Applikation 7 mit Navigationsfunktion öffnet. Ein langes Betätigen der Pfeiltaste 17b bewirkt eine Öffnung der Applikation 7 mit Musikfunktion. Eine lange Betätigung der Rücktaste 18 führt ins Hauptmenü, in dem wiederum die öffenbaren Applikationen 7 mittels Piktogrammen dargestellt sind.

Anhand des Beispiels einer Applikation 7 mit Musikfunktion wird dargestellt, wie mittels der Bedieneinheit 1 Steuerbefehle für die Steuerung der Applikation 7 generiert und übermittelt werden. Eine Betätigung der Pfeiltaste 17a bewirkt eine Auswahl des vorherigen Lieds, eine Betätigung der Pfeiltaste 17b bewirkt eine Auswahl des nächsten Liedes in der ausgewählten Playlist. Eine kurze Betätigung der Auswahltaste 16 bewirkt ein Anhalten des Abspielens. Eine erneute kurze Betätigung bewirkt eine Fortsetzung des Abspielens. Die Betätigung der Rücktaste 18 bewirkt ein erneutes Abspielen des ausgewählten Musikstücks von Anfang an.

Die Tasten des Vierwegeschalters können auch für die Steuerung der öffenbaren Applikationen 7 mit einer zweiten Funktion belegt sein. So kann beispielsweise vorgesehen sein, dass ein langes Drücken der Taste 17a die Lautstärke des abgespielten Musikstücks erhöht. Ein langes Betätigen der Pfeiltaste 17b bewirkt eine Reduktion der Lautstärke. Eine lange Betätigung der Rücktaste 18 führt ins Hauptmenü. Eine lange Betätigung der Auswahltaste 16, die auch als Umschaltvorrichtung 16 fungiert, bewirkt eine Beendigung des Betriebsmodus der Bedieneinheit 1, indem das Multifunktionsgerät 2 gesteuert wird.

In diesem Ausführungsbeispiel dient die Auswahltaste 16 als Umschaltvorrichtung. Denkbar wäre es auch für die Umschaltvorrichtung 16, einen gesonderten Schalter vorzusehen oder eine Anwahlmöglichkeit in der Displayeinheit 3 für die Aktivierung der Steuerung des Multifunktionsgeräts 2 vorzusehen.

Fig. 3 zeigt in einer schematischen Darstellung eine Ausführungsform der Erfindung, bei der eine einen Sechswegeschalter umfassende Bedieneinheit 1 über eine Bus-Leitung 9, beispielsweise eine CAN-Bus-Leitung, Steuerbefehle an ein als Smartphone ausgebildetes Multifunktionsgeräts 2 übermitteln kann. Das Multifunktionsgerät 2 ist in einer Halterung 12 angeordnet. Die Bus-Leitung 9 kann über einen geeigneten Stecker mit dem Multifunktionsgerät 2 verbunden sein. Es ist aber auch möglich, dass die Halterung 12 eine Sendeeinheit 6 aufweist, von welcher die Steuerbefehle drahtlos an das Multifunktionsgerät 2 übermittelbar sind. Dabei handelt es sich in diesem Ausführungsbeispiel um eine NFC-Sendeeinheit, die als Alternative zu einem Bluetooth^{®}-Modul einsetzbar ist. Das Multifunktionsgerät 2 weist eine Empfangsvorrichtung auf. Dadurch können von einem Head-Set 5 generierte Steuerbefehle, die mittels Bluetooth^{®} übermittelt werden, empfangen werden. Dadurch können mittels Sprachbefehlen Applikationen 7 gesteuert werden. Das neben dem Symbol für die NFC-Sendeeinheit dargestellte Symbol zeigt an, dass die Halterung 12 über eine induktive Ladevorrichtung 13 verfügt.

In der hier dargestellten Ausführungsform ist die Bedieneinheit 1 als 6-Wege Schalter ausgebildet, die über einen CAN-Bus 9 mit der Halterung 12 und damit der Sendeeiheit 6 verbunden ist. Der 6-Wege Schalter weist einen Steuerkranz auf, der über Links- und Rechts-Tasten sowie über Oben- und Unten-Tasten verfügt. Der im Zentrum des Steuerkranzes angeordnete Drückschalter fungiert als Umschaltvorrichtung 16. Der links oberhalb des Steuerkranzes angeordnete Drückschalter fungiert als Rücktaste 18. Neben diesem Schalter ist ein Stellschalter 19 angeordnet, der zum Verstellen der Tempomat-Funktion dient. Im hinteren oberen Bereich ist ein Kippschalter angeordnet, der zum Ein- und Ausschalten des Fernlichts dient. Unterhalb des Steuerkranzes ist ein Stellschalter für die Fahrtrichtungsanzeiger angeordnet. Unterhalb dieses Stellschalters ist ein Drückschalter für die Hupe angeordnet. Auf der linken Seite sind zwei weitere Drückschalter angeordnet, die beispielsweise zum Ein- und Ausschalten der Tempomatfunktion dienen.

In der Fig. 4a ist eine weitere Ausführungsform der Erfindung in einer schematischen Darstellung gezeigt. Dabei ist die Bedieneinheit 1 über eine Drahtleitung 8 mit einer Sendeeinheit 6 verbunden. Die Sendeeinheit 6 ihrerseits ist mit einer Drahtleitung 8 mit der Displayeinheit 3 verbunden. Die Sendeeinheit 6 weist einen Mikrocontroller und ein Bluetooth^{®}-Modul auf, mit denen von der Bedieneinheit 1 generierte Steuerbefehle via Bluetooth^{®} an ein Multifunktionsgerät 2 übermittelbar sind.

Das Multifunktionsgerät 2 ist ebenfalls über Bluetooth^{®} an ein Head-Set 5 gekoppelt. Dabei weist das Multifunktionsgerät 2 eine Sendevorrichtung auf, mit der Steuerbefehle sowie Daten an das Head-Set 5 übermittelbar sind. Gleichzeitig weist das Multifunktionsgerät 2 auch eine Empfangsvorrichtung auf, mit der Steuerbefehle vom Head-Set 5 zur Steuerung der installierten Applikationen 7 empfangbar sind.

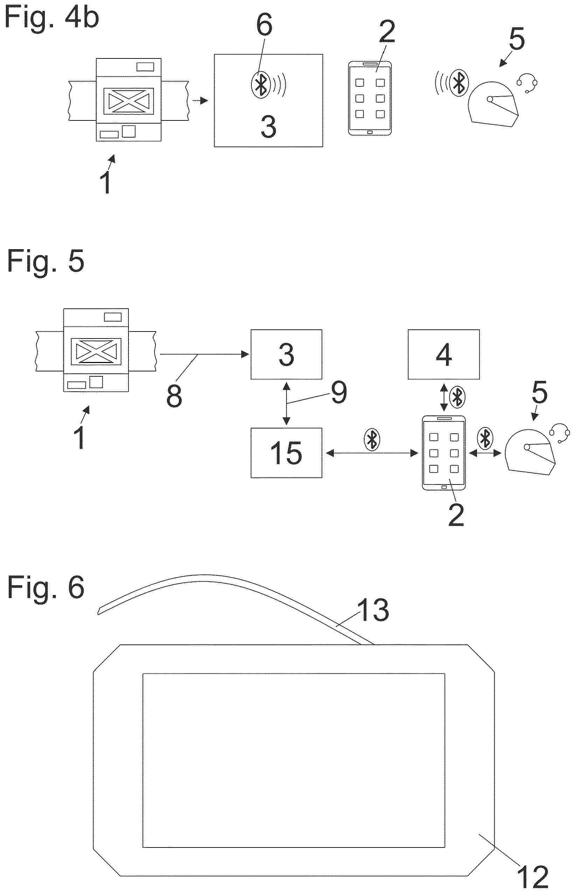

In Fig. 4b ist eine weitere Ausführungsform der Erfindung in einer schematischen Darstellung gezeigt. Diese Ausführungsform unterscheidet sich von der in Fig. 4a gezeigten Ausführungsform dadurch, dass die Sendeeinheit 6 ein integraler Bestandteil der Displayeinheit 3 ist.

Das erfindungsgemäße Computerprogrammprodukt, mit dem die Betriebsmodi gewechselt, ist auf einem computerlesbaren Speichermedium im Motorrad hinterlegt, etwa in der Steuereinheit, der Sendeeinheit, der Kommunikationseinheit, der Displayeinheit oder direkt in der Bedieneinheit.

In Fig. 5 ist in einer schematischen Darstellung eine weitere Ausführungsform der Erfindung gezeigt. Wiederum ist die Bedieneinheit 1 mittels einer Drahtleitung 8 mit der Displayeinheit 3 verbunden. Über eine Bus-Leitung 9, beispielsweise in Form einer CAN-Bus-Leitung, ist die Displayeinheit 3 mit einer Kommunikationseinheit 15 verbunden. Die Kommunikationseinheit 15 dient zur Kommunikation mit verschiedenen Bauteilen des Motorrads 10. Insbesondere weist die Kommunikationseinheit 15 eine Sendeeinheit 6 auf, von der Steuerbefehle drahtlos, vorzugsweise gemäß dem Bluetooth^{®}-Standard, an das Multifunktionsgerät 2 übermittelbar sind. Das Multifunktionsgerät 2 weist eine Sendevorrichtung auf, mit der Daten und/oder Steuerbefehle drahtlos, wiederum bevorzugt gemäß dem Bluetooth^{®}-Standard, an externe Geräte 4, wie z. B. eine Smart-Watch oder eine Kamera oder ein Head-Set 5, übermittelbar sind. Weiters können mit der Sendevorrichtung auch Daten, beispielsweise Musikstücke, an die externen Geräte 4, insbesondere an das Head-Set 5, übermittelt werden.

Weiters weist das Multifunktionsgerät 2 eine Empfangsvorrichtung auf, von der Daten und/oder Steuerbefehle von den externen Geräten 4 und/oder vom Head-Set 5 empfangbar sind.

Fig. 6 zeigt die Halterung 12, die in diesem Fall zur Aufnahme eines Smartphones ausgebildet ist. Die Halterung 12 weist eine induktive Ladevorrichtung 13 auf, bestehend aus eine Ladeschale und einem daran angeschlossenen Ladekabel, das mit der Stromversorgung des Motorrads 10 verbunden ist.

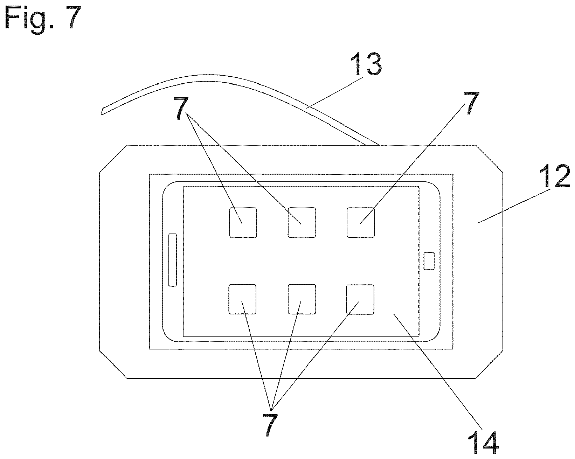

Fig. 7 zeigt eine Darstellung eines Multifunktionsgeräts 2 in Form eines Smartphones, das in einer Halterung 12 angeordnet ist. Dargestellt ist der Bildschirm 14 mit den Piktogrammen für die von der erfindungsgemäßen Applikation öffenbaren weiteren Applikationen 7. Beispielhaft seien hier einige Applikationen 7 erwähnt, die während der Fahrt über die Bedieneinheit 1 bedienbar sind.

Eine öffenbare Applikation 7 weist eine Navigationsfunktion auf. Dabei kann es sich beispielsweise um die bei Autofahrern besonders beliebte Google^{®}-Maps-Applikation handeln, weil diese übersichtlich und einfach zu bedienen ist und außerdem hervorragende Echtzeit-Verkehrsinformationen bietet. Es kann dabei vorgesehen sein, dass nicht die ganze Funktionalität dieser Applikation geboten wird, sondern eine reduzierte, auf den Betrieb während der Fahrt angepasste Funktionalität. Die Google^{®}-Maps-Applikation bietet darüber hinaus eine umfangreiche Schnittstelle, mit der eine Zielführung aus einer anderen Applikation, insbesondere aus der erfindungsgemäßen Applikation (Schnittstellen-Applikation) starten kann. Außerdem können Navigationsziele gesucht werden und es werden Orte in der näheren Umgebung, wie z. B. Tankstellen, angeboten.

Eine weitere öffenbare Applikation 7, die von der Bedieneinheit 1 steuerbar ist, weist eine Musikfunktion auf. Dabei kann es sich beispielsweise um einen Musikplayer handeln, der auf Musikstücke zugreift, die auf dem Multifunktionsgerät 2 gespeichert sind. Es kann sich aber auch um einen Streaming-Dienstleister handeln Eine weitere von der erfindungsgemäßen Applikation öffenbare Applikation 7 weist eine Messaging-Funktion auf. Dadurch können Nachrichten empfangen oder gesendet werden. Diese Applikation 7 kann über drahtlos empfangene Sprachbefehle eines Head-Sets 5 gesteuert werden. Zudem können die empfangenen Nachrichten vom Multifunktionsgerät 2 in Sprache umgewandelt und an ein Head-Set 5 übermittelt werden.

Eine weitere Applikation 7 weist eine Telefonfunktion auf. Wiederum mit einem Head-Set 5 können Telefonate geführt werden. Dabei kann über das Head-Set 5 und/oder über die Bedieneinheit 1 anzurufende Personen aus einer Kontaktliste ausgewählt werden.

Eine weitere Applikation 7, die von der erfindungsgemäßen Applikation öffenbar ist, weist eine Wetterfunktion auf. Eine Auswahl dieser Applikation 7 liefert eine gegebenenfalls sprachlich ausgegebene Wettervorhersage, wobei die Applikation 7 auf Standortdaten zurückgreifen kann.

Weiters kann eine Applikation 7 öffenbar und steuerbar sein, die eine externe Kamera ansteuert, welche beispielsweise am Helm oder am Motorrad 10 montiert ist.

Eine weitere öffenbare und ansteuerbare Applikation 7 stellt Informationen zum Fahrzustand und/oder zu Betriebsparametern des Motorrads 10 dar. Bei Ausfall dieser Applikation 7 dient der Bildschirm 14 des Multifunktionsgeräts 2 als Zusatz-Bildschirm neben der Displayeinheit 3.

### Bezugszeichenliste:

- 1: Bedieneinheit
- 2: Multifunktionsgerät
- 3: Displayeinheit
- 4: Externes Gerät
- 5: Head-Set
- 6: Sendeeinheit
- 7: Öffenbare Applikationen
- 8: Drahtleitung
- 9: Bus-Leitung
- 10: Motorrad
- 11: Lenker
- 12: Halterung
- 13: Ladevorrichtung
- 14: Bildschirm
- 15: Kommunikationseinheit
- 16: Umschaltvorrichtung
- 17a, 17b: Pfeiltasten
- 18: Rücktaste
- 19: Stellschalter

## Patentansprüche

1. Motorrad mit
• einer Displayeinheit (3) zur Darstellung von Informationen zum Fahrzustand und zu Betriebsparametern des Motorrads (10),
• einer Bedieneinheit (1) von der Steuerbefehle zur Steuerung der Displayeinheit (3) generierbar sind,
• einem, vorzugsweise als Smartphone ausgebildetem, Multifunktionsgerät (2) mit einem Bildschirm (14), **dadurch gekennzeichnet, dass** das Multifunktionsgerät in einer Halterung (12) lösbar befestigbar ist, und
wobei eine Applikation auf dem Multifunktionsgerät (2) installierbar ist mit der weitere, auf dem Multifunktionsgerät (2) installierte Applikationen (7) öffenbar sind, wobei die Auswahl an von der Applikation öffenbaren weiteren Applikationen (7) in Form von Piktogrammen auf dem Bildschirm (14) darstellbar ist,
und wobei das Motorrad weiterhin umfasst
eine Steuereinheit mit der Steuerbefehle zur Steuerung der Applikation und den von der Applikation öffenbaren weiteren Applikationen (7) an das Multifunktionsgerät (2) übermittelbar sind,
wobei die Steuerbefehle zur Steuerung der Applikation und den von der Applikation öffenbaren weiteren Applikationen (7) von der Bedieneinheit (1) generierbar sind, wobei eine Umschaltvorrichtung (16) zum Wechsel zwischen der Steuerung der Displayeinheit (3) und der Steuerung des Multifunktionsgeräts (2) vorgesehen ist

2. Motorrad nach dem vorhergehenden Anspruch, wobei die Bedieneinheit (1) als Griffschalter am Lenker (11) ausgebildet ist und vorzugsweise Pfeiltasten (17a, 17b) und/oder einen Mehrwegeschalter, vorzugsweise einen Vier-, Fünf-, oder Sechswegeschalter, umfasst.

3. Motorrad nach wenigstens einem der vorhergehenden Ansprüche, wobei die Umschaltvorrichtung (16) als Betätigungselement, vorzugsweise als Schalter, der Bedieneinheit (1) ausgebildet ist.

4. Motorrad nach wenigstens einem der vorhergehenden Ansprüche, wobei eine Sendeeinheit (6) vorgesehen ist, mit der die Steuerbefehle zur Steuerung der Applikation und den von der Applikation öffenbaren weiteren Applikationen (7) drahtlos an das Multifunktionsgerät (2) übermittelbar sind.

5. Motorrad nach dem vorhergehenden Anspruch, wobei die Sendeeinheit (6) zum Senden von Funkbefehlen, insbesondere gemäß dem Bluetooth^{®}-Standard, ausgebildet ist.

6. Motorrad nach wenigstens einem der vorhergehenden Ansprüche, wobei von der Steuereinheit und/oder der Sendeeinheit (6) Informationen zum Fahrzustand und/oder zu Betriebsparametern des Motorrads an das Multifunktionsgerät (2), vorzugsweise drahtlos, übermittelbar sind und vorzugsweise auf dem Bildschirm (14) des Multifunktionsgeräts (2) darstellbar sind.

7. Motorrad nach wenigstens einem der vorhergehenden Ansprüche, wobei wenigstens eine der weiteren, von der Applikation öffenbaren Applikationen (7) eine Navigationsfunktion und/oder eine Steuerungsfunktion für ein externes Gerät (4, 5) aufweist.

8. Motorrad nach wenigstens einem der vorhergehenden Ansprüche, wobei das Multifunktionsgerät (2) eine Empfangsvorrichtung aufweist, von der Steuerbefehle zur Steuerung der Applikation und den von der Applikation öffenbaren weiteren Applikationen (7), welche von einem externen Gerät (4, 5) generiert und übermittelt werden, empfangbar sind.

9. Motorrad nach wenigstens einem der vorhergehenden Anspruch, wobei das Multifunktionsgerät (2) eine Sendevorrichtung aufweist, von der Steuerbefehle, welche von der oder von den Applikationen mit Steuerungsfunktion für externe Geräte (4, 5) generiert werden, an das oder die externen Gerät(e) (4, 5) drahtlos, zum Beispiel gemäß dem Bluetooth^{®}-Standard, übermittelbar sind.

10. Motorrad nach wenigstens einem der vorhergehenden Ansprüche, wobei die Halterung (12) eine Ladevorrichtung (13) des Multifunktionsgeräts (2) aufweist.

11. Motorrad nach wenigstens einem der vorhergehenden Ansprüche, wobei das Motorrad einen computerlesbaren Datenträger umfasst, auf dem ein Computerprogrammprodukt für den Betrieb des Motorrads gespeichert ist, wobei das Computerprogrammprodukt Befehle umfasst, die bei der Ausführung des Programms durch einen Computer diesen veranlassen,
• die Bedieneinheit (1) des Motorrads (10) in zwei Betriebsmodi zu betreiben, wobei in einem Betriebsmodus bei Betätigung der Bedienungseinheit (1) Steuerbefehle zur Steuerung der Displayeinheit (3) zur Darstellung von Informationen zum Fahrzustand und zu Betriebsparametern des Motorrads (10) generiert werden, während im anderen Betriebsmodus bei Betätigung der Bedienungseinheit (1) Steuerbefehle zur Steuerung einer auf dem Multifunktionsgerät (2) installierten Applikation sowie von weiteren, von der Applikation öffenbaren, auf dem Multifunktionsgerät installierten Applikationen (7) generiert und, vorzugsweise drahtlos, an das Multifunktionsgerät (2) übermittelt werden, und
• die Umschaltvorrichtung (16) auf Betätigung zu überwachen und bei Betätigung der Umschaltvorrichtung (16) den Betriebsmodus zu wechseln.

12. Motorrad nach wenigstens einem der vorhergehenden Ansprüche, wobei das Multifunktionsgerät (2) einen computerlesbaren Datenträger umfasst, auf dem ein Computerprogrammprodukt gespeichert ist, wobei das Computerprogrammprodukt Befehle umfasst, die bei der Ausführung des Programms durch das Multifunktionsgerät (2) dieses veranlassen, von der Bedieneinheit (1) generierte Steuerbefehle zu übernehmen und auf dem Multifunktionsgerät (2) installierte Applikationen zu öffnen und zu steuern.

## Claims

1. A motorcycle, comprising
• a display unit (3) for representing information on the driving state and on operating parameters of the motorcycle (10),
• an operating unit (1), which may generate control commands for controlling the display unit (3),
• a multifunctional device (2), preferably designed as a smartphone, comprising a screen (14),
**characterized in that** the multifunctional device can be releasably attached in a holder (12) and wherein an application can be installed on the multifunctional device (2), using which further applications (7) installed on the multifunctional device (2) can be opened, wherein the selection of further applications (7), which can be opened by the application, can be represented on the screen (14) in the form of pictograms, and wherein the motorcycle further comprises a control unit, using which control commands for controlling the application and the further applications (7), which can be opened by the application, can be transmitted to the multifunctional device (2), wherein the control commands for controlling the application and the further applications (7), which can be opened by the application, can be generated by the operating unit (1), wherein a switching device (16) for switching between control of the display unit (3) and control of the multifunctional device (2) is provided.

2. The motorcycle according to the preceding claim, wherein the operating unit (1) is designed as a grip switch at the handlebar (11) and preferably comprises arrow keys (17a, 17b) and/or a multi-way switch, preferably a four-, five-, or six-way switch.

3. The motorcycle according to at least one of the preceding claims, wherein the switching device (16) is designed as an actuating element, preferably as a switch, of the operating unit (1) .

4. The motorcycle according to at least one of the preceding claims, wherein a sending unit (6) is provided, using which the control commands for controlling the application and the further applications (7), which can be opened by the application, can be wirelessly transmitted to the multifunctional device (2).

5. The motorcycle according to the preceding claim, wherein the sending unit (6) is designed to send radio commands, in particular according to the Bluetooth^{®} standard.

6. The motorcycle according to at least one of the preceding claims, wherein the control unit and/or the sending unit (6) can transmit information on the driving state and/or on operating parameters of the motorcycle to the multifunctional device (2), preferably in a wireless manner and preferably can be represented on the screen (14) of the multifunctional device (2)

7. The motorcycle according to at least one of the preceding claims, wherein at least one of the further applications (7), which can be opened by the application, has a navigation function and/or a control function for an external device (4, 5) .

8. The motorcycle according to at least one of the preceding claims, wherein the multifunctional device (2) has a receiving device, which may receive control commands for controlling the application and the further applications (7), which can be opened by the application, which commands are generated and transmitted by an external device (4, 5).

9. The motorcycle according to at least one of the preceding claims, wherein the multifunctional device (2) has a sending device, which may wirelessly transmit control commands, which are generated by the application(s) with a control function for external devices (4, 5), to the external device(s) (4, 5), for example according to the Bluetooth^{®} standard.

10. The motorcycle according to at least one of the preceding claims, wherein the holder (12) includes a charging device (13) of the multifunctional device (2).

11. The motorcycle according to at least one of the preceding claims, wherein the motorcycle comprises a computer-readable data carrier, on which a computer programme product for operating the motorcycle is stored, wherein the computer programme product comprises commands, which upon execution of the programme by a computer cause the same to
• operate the operating unit (1) of the motorcycle (10) in two operating modes, wherein in one operating mode, upon actuation of the operating unit (1), control commands for controlling a display unit (3) for representing information on the driving state and on operating parameters of the motorcycle (10) are generated, while in the other operating mode, upon actuation of the operating unit (1), control commands for controlling an application installed on a multifunctional device (2) as well as further applications (7) installed on the multifunctional device, which can be opened by the application, are generated and transmitted, preferably in a wireless manner, to the multifunctional device (2), and
• monitor a switching device (16) for actuation and, upon actuation of the switching device (16), switch the operating mode.

12. The motorcycle according to at least one of the preceding claims, wherein the multifunctional device (2) comprises a computer-readable data carrier, on which a computer programme product is stored, wherein the computer programme product comprises commands which cause the same to accept control commands generated by the operating unit (1) and to open and control applications installed on the multifunctional device (2) .

## Revendications

1. Motocyclette avec
- une unité d'affichage (3) pour la représentation d'informations sur l'état de roulement et sur les paramètres de fonctionnement de la motocyclette (10),
- une unité de commande (1), par laquelle des ordres de commande peuvent être générés pour la commande de l'unité d'affichage (3),
- un appareil multifonctionnel (2) réalisé de préférence comme un Smartphone avec un écran (14), **caractérisée en ce que** l'appareil multifonctionnel peut être fixé de manière amovible dans un support (12), et
dans laquelle une application peut être installée sur l'appareil multifonctionnel (2), avec laquelle d'autres applications (7) installées sur l'appareil multifonctionnel (2) peuvent être ouvertes, dans laquelle la sélection d'autres applications (7) pouvant être ouvertes par l'application peut être représentée sous la forme de pictogrammes sur l'écran (14),
et dans laquelle la motocyclette comprend en outre
- une unité de commande, avec laquelle des ordres de commande peuvent être transmis pour la commande de l'application et des autres applications (7) pouvant être ouvertes par l'application à l'appareil multifonctionnel (2),
dans laquelle les ordres de commande peuvent être générés pour la commande de l'application et des autres applications (7) pouvant être ouvertes par l'application par l'unité de commande (1), dans laquelle un dispositif de commutation (16) est prévu pour le changement entre la commande de l'unité d'affichage (3) et la commande de l'appareil multifonctionnel (2).

2. Motocyclette selon la revendication précédente, dans laquelle l'unité de commande (1) est réalisée comme commutateur de poignée sur le guidon (11) et comprend de préférence des boutons flèches (17a, 17b) et/ou un commutateur multivoies, de préférence un commutateur quatre, cinq ou six voies.

3. Motocyclette selon au moins l'une quelconque des revendications précédentes, dans laquelle le dispositif de commutation (16) est réalisé comme élément d'actionnement, de préférence comme commutateur, de l'unité de commande (1).

4. Motocyclette selon au moins l'une quelconque des revendications précédentes, dans laquelle une unité d'émission (6) est prévue, avec laquelle les ordres de commande peuvent être transmis sans fil à l'appareil multifonctionnel (2) pour la commande de l'application et des autres applications (7) pouvant être ouvertes par l'application.

5. Motocyclette selon la revendication précédente, dans laquelle l'unité d'émission (6) est réalisée pour l'envoi d'ordres radio, en particulier selon la norme Bluetooth^{®}.

6. Motocyclette selon au moins l'une quelconque des revendications précédentes, dans laquelle des informations sur l'état de roulement et/ou sur les paramètres de fonctionnement de la motocyclette peuvent être transmises à l'appareil multifonctionnel (2), de préférence sans fil, par l'unité de commande et/ou l'unité d'émission (6) et peuvent être représentées de préférence sur l'écran (14) de l'appareil multifonctionnel (2).

7. Motocyclette selon au moins l'une quelconque des revendications précédentes, dans laquelle au moins une des autres applications (7) pouvant être ouvertes par l'application présente une fonction de navigation et/ou une fonction de commande pour un appareil externe (4, 5).

8. Motocyclette selon au moins l'une quelconque des revendications précédentes, dans laquelle l'appareil multifonctionnel (2) présente un dispositif de réception, par lequel des ordres de commande peuvent être reçus pour la commande de l'application et des autres applications (7) pouvant être ouvertes par l'application qui sont générées et transmises par un appareil externe (4, 5).

9. Motocyclette selon au moins l'une quelconque des revendications précédentes, dans laquelle l'appareil multifonctionnel (2) présente un dispositif d'émission, par lequel des ordres de commande qui sont générés par la ou par les applications avec une fonction de commande pour des appareils externes (4, 5), peuvent être transmis à ou aux appareil(s) externe(s) (4, 5) sans fil, par exemple selon la norme Bluetooth^{®}.

10. Motocyclette selon au moins l'une quelconque des revendications précédentes, dans laquelle le support (12) présente un dispositif de charge (13) de l'appareil multifonctionnel (2).

11. Motocyclette selon au moins l'une quelconque des revendications précédentes, dans laquelle la motocyclette comprend un support de données lisible sur ordinateur, sur lequel un produit de programme informatique est enregistré pour le fonctionnement de la motocyclette, dans laquelle le produit de programme informatique comprend des ordres qui amènent lors de la réalisation du programme par un ordinateur celui-ci
- à faire fonctionner l'unité de commande (1) de la motocyclette (10) dans deux modes de fonctionnement, dans laquelle dans un mode de fonctionnement lors de l'actionnement de l'unité de commande (1), des ordres de commande sont générés pour la commande de l'unité d'affichage (3) pour la représentation d'informations sur l'état de roulement et sur les paramètres de fonctionnement de la motocyclette (10), alors que dans un autre mode de fonctionnement lors de l'actionnement de l'unité de commande (1), des ordres de commande sont générés pour la commande d'une application installée sur l'appareil multifonctionnel (2) ainsi que d'autres applications (7) installées sur l'appareil multifonctionnel, pouvant être ouvertes par l'application, et sont transmises de préférence sans fil à l'appareil multifonctionnel (2), et
- à surveiller l'actionnement du dispositif de commutation (16) et à passer lors de l'actionnement du dispositif de commutation (16) au mode de fonctionnement.

12. Motocyclette selon au moins l'une quelconque des revendications précédentes, dans laquelle l'appareil multifonctionnel (2) comprend un support de données lisible sur ordinateur, sur lequel est enregistré un produit de programme informatique, dans laquelle le produit de programme informatique comprend des ordres qui amènent lors de la réalisation du programme par l'appareil multifonctionnel (2) celui-ci à prendre des ordres de commande générés par l'unité de commande (1) et à ouvrir et à commander des applications installées sur l'appareil multifonctionnel (2).
